Europäisches Patentamt

**European Patent Office**

**Office européen des brevets**

(19)

(11) Veröffentlichungsnummer: **0 264 643 B1**

# (12) EUROPÄISCHE PATENTSCHRIFT

(45) Veröffentlichungstag der Patentschrift: **20.05.92**

(21) Anmeldenummer: **87113767.5**

(22) Anmeldetag: **21.09.87**

(51) Int. Cl.⁵: **B24D 3/06**, B23K 35/30

Die Akte enthält technische Angaben, die nach dem Eingang der Anmeldung eingereicht wurden und die nicht in dieser Patentschrift enthalten sind.

(54) **Verfahren zum Beschichten von Oberflächen mit Hartstoffen.**

(30) Priorität: **17.10.86 DE 3635369**

(43) Veröffentlichungstag der Anmeldung:
**27.04.88 Patentblatt 88/17**

(45) Bekanntmachung des Hinweises auf die
Patenterteilung:
**20.05.92 Patentblatt 92/21**

(84) Benannte Vertragsstaaten:
**AT BE CH DE ES FR GB IT LI NL SE**

(56) Entgegenhaltungen:
**EP-A- 0 104 063**
**DE-B- 1 508 336**
**GB-A- 972 835**
**GB-A- 2 163 144**

**PATENT ABSTRACTS OF JAPAN, Band 10,
Nr. 257 (M-513)[2313], 3. September 1986; &
JP-A-61 82 995 (TANAKA KININZOKU KOGYO
K.K.) 26-04-1986**

(73) Patentinhaber: **Degussa Aktiengesellschaft
Weissfrauenstrasse 9
W-6000 Frankturt am Main 1(DE)**

(72) Erfinder: **Malikowski, Willi
Brentanoplatz 11
W-8750 Aschaffenburg(DE)**
Erfinder: **Szulczyk, Andreas, Dipl.-Ing.
Im Hirtengarten 31
W-6465 Linsengericht 5(DE)**
Erfinder: **Böhm, Wolfgang, Dr., Dipl.-Ing.
Kronbergweg 2
W-8755 Alzenau-Albstadt(DE)**
Erfinder: **Weise, Wolfgang, Dr., Dipl.-Ing.
Merianstrasse 40
W-6000 Frankturt 1(DE)**
Erfinder: **Mürrle, Ulrich, Dr., Dipl.-Ing.
Fürstenbergstrasse 2
W-6450 Hanau 9(DE)**

## Beschreibung

Die Erfindung betrifft ein Verfahren zum Beschichten der Oberfläche von metallischen und keramischen Körpern mit Hartstoffen in Form von Diamanten, keramischen Oxiden, Nitriden, Siliziden und Boriden durch Auflöten entsprechender Pulver unter Vakuum oder Schutzgas.

Der Aufbringung von harten Stoffen auf die Oberfläche von metallischen oder keramischen Substraten kommt bei der Herstellung von Abtragungswerkzeugen große Bedeutung zu. Bekannt sind z.B. das galvanische Aufbringen, das Aufsintern von Hartstoffdispersionen auf Substrate oder das Aufbringen mit einem organischen Kunststoff.

In der DE-AS 12 59 681 wird ein Verfahren zum Verbinden von Einzeldiamanten mit metallischen Oberflächen durch Löten bei 1100 bis 1300° C unter Vakuum oder Schutzgas mit einem binären oder ternären Lot aus Gold mit 1 bis 25 % Tantal und/oder 1 bis 10 % Niob beschrieben. Dieses Verfahren ist relativ arbeitsaufwendig und erfordert teure Goldlote.

In der DE-AS 12 10 300 ist ein Verfahren beschrieben, bei dem Diamanten zunächst in einer Suspension aus Titanpulver und einem Lösungsmittel eingetaucht werden.

Nach Verdampfen des leichtflüchtigen Lösungsmittels wird der vorbeschichtete Diamant in eine Schmelze aus Silber-Kupfer-Eutektikum getaucht, das überschüssige Lotmetall entfernt und dann gelötet. Dieses Verfahren ist für die Lötung von Einzeldiamanten geeignet. Eine flächige Beschichtung mit einer feinteiligen Dispersion von Diamanten ist mit diesem Verfahren nicht möglich.

Die GB-A-2 163 144 offenbart das Aufbringen von kompakten Diamantformkörpern auf Unterlagen mittels Lotlegierungen, die beispielsweise aus Silber-Kupfer-Palladium-Titan bestehen.

Aus der DE-OS 24 11 785 ist ein Verfahren zur Herstellung von Schleifwerkzeugarbeitsflächen durch Auflöten von nicht vorbeschichteten Diamantkristallen auf Metalloberflächen bekannt, indem die Diamantkristalle zusammen mit einem Lotlegierungspulver und einem Bindemittel auf die Oberfläche aufgebracht und auf etwa 1300° C erhitzt wird. Als Lot wird eine Legierung mit mindestens 50 % Nickel und mindestens 5 % Chrom verwendet. Die hohen Löttemperaturen können allerdings das Diamantpulver zum Graphitisieren veranlassen und zu Verwerfungen der Unterlagen führen. Außerdem verlangen die Chromanteile des Lots eine Ofenatmosphäre mit sehr niedrigem Taupunkt.

Es war daher Aufgabe der vorliegenden Erfindung, ein Verfahren zum Beschichten der Oberfläche von metallischen und keramischen Körpern mit Hartstoffen in Form von Diamanten, keramischen Oxiden, Nitriden, Siliziden und Boriden durch Auflöten entsprechender Pulver unter Vakuum oder Schutzgas zu entwickeln, das mit einfachen Verfahrensschritten bei relativ niedriger Temperatur ohne Vorbeschichtung der Hartstoffe eine feste Haftung auf der Oberfläche ergibt.

Diese Aufgabe wird erfindungsgemäß dadurch gelöst, daß als Lot eine Pulvermischung aus 60 bis 90 Gew. % Silberpulver, 2 bis 35 Gew. % Kupferpulver, 2 bis 30 Gew. % Zinn- und/oder Indiumpulver und 2 bis 20 Gew. % Titan, Zirkonium, Hafnium, Chrom, Vanadium, Tantal, Niob, Titanhydrid, Zirkoniumhydrid und/oder Hafniumhydrid in Pulverform mit einem organischen Bindemittel auf die zu beschichtende Oberfläche aufgetragen wird, wobei die Teilchengröße der Metallpulver kleiner sein muß als die des aufzutragenden Hartstoffpulvers, anschließend das Hartstoffpulver aufgebracht und das ganze auf Temperaturen zwischen 900 und 1200° C erhitzt wird.

Dabei kann die Menge der metallischen Komponente so abgestimmt werden, daß bei optimaler Haftung eine vollständige Benetzung des eingebetteten Hartstoffs vermieden wird. Das wirkt sich günstig für den Einsatz der so hergestellten Oberflächen zur Bearbeitung verschiedenster Materialien, wie Keramik, Glas oder Metall aus.

Vorzugsweise wird das Hartstoffpulver trocken auf die zuvor mit einem Bindemittel belegte Metallpulverschicht aufgebracht.

Weiterhin ist es von Vorteil, wenn die Teilchengröße des pulverförmigen Titan, Zirkonium, Hafnium, bzw. derer Hydride, Chrom, Vanadium, Tantal, Niob kleiner ist als die Teilchengröße des Silberpulvers.

Zunächst wird beispielsweise eine Mischung elementarer Metallpulver mit einem geeigneten organischen Bindemittel zu einer Suspension verarbeitet. Die Teilchengröße der verwendeten Metallpulver muß dabei kleiner sein als die Teilchengröße der aufzubringenden Hartstoffe. Besonders vorteilhaft ist es, wenn die Teilchengröße der Metallpulvermischung deutlich kleiner als die des aufzubringenden Hartstoffpulvers ist. Ist die Hauptkomponente Silber in ihrer Teilchengröße deutlich größer als die anderen Pulverkomponenten, kann eine feine Verteilung der Komponenten in der Suspension erzielt werden, was sich auf die Beschichtung günstig auswirkt. Nach der Aufbringung der Suspension auf die zuvor entfettete metallische oder keramische Unterlage wird diese Vorbeschichtung zunächst getrocknet. Als organische Bindemittel können alle üblichen Bindemittel verwendet werden, wie z.B. Äthylzellulose oder Polymethylmethacrylat.

Das vorgetrocknete Bauteil wird in einem nächsten Schritt mit dem reinen Bindemittel eingesprüht oder kann auch in Einzelfällen kurz in das Bindemittel eingetaucht werden. Das Hartstoffpulver wird unmittelbar danach aufgestreut oder von einer geeigneten Unterlage aufgenommen. Als Dosiereinrichtung können handelsübliche Dosierrinnen verwendet werden. Nach einem weiteren Sprühschritt werden die vorbeschichteten Teile getrocknet.

Oft erweist es sich als vorteilhaft, die metallische oder keramische Unterlage vor der Beschichtung mit der Metallpulversuspension mit dem Bindemittel zu bestreichen und danach die Metallpulversuspension aufzubringen. Die weiteren Verfahrensschritte laufen dann in der eingangs beschriebenen Weise ab.

Für die Beschichtung geneigter oder senkrechter Flächen können die vorbeschichteten Teile mit einer anorganischen Stützhaut versehen werden. Diese Stützhaut verhindert ein Aublaufen der flüssigen Metallegierung und des aufzulötenden Hartstoffs während des Lötens im Ofen.

Die Herstellung der eigentlichen Verbundschicht auf der metallischen oder keramischen Unterlage erfolgt bei Temperaturen von 900° C bis 1200° C. Dazu ist vorzugsweise eine Argonatmosphäre hoher Reinheit notwendig, um Reaktionen zwischen der aktiven Komponente in der Metallpulvermischung und Restgasen zu vermeiden. Während des Aufheizens bildet sich eine Metallschmelze, die sowohl den Hartstoff als auch die metallische oder keramische Unterlage benetzt. Beim Abkühlen wird der Hartstoff durch das gebildete Lot kraftschlüssig mit dem Substrat verbunden.

In Einzelfällen kann es von Vorteil sein, eine dickere Schicht aus Hartstoff und Lot auf dem Substrat aufzubauen. Mit dem erfindungsgemäßen Verfahren kann die Auftragung mehrere Male wiederholt werden. Dabei können die Lotzusammensetzung und die Art und Größe der Hartstoffe von Schicht zu Schicht verändert werden.

Nach diesem Verfahren beschichtete Metall- oder Keramikoberflächen zeichnen sich durch eine gleichmäßige Verteilung des Hartstoffes aus.

Folgende Beispiele sollen das erfindungsgemäße Verfahren näher erläutern:

1. Die Mantelfäche eines zylindrischen Metallkörpers wurde mit einer Pulver-Bindemittelmischung aus 70 Gew. % Silber, 10 Gew. % Kupfer, 10 Gew. % Indium und 10 Gew. % Titan vorbeschichtet, nachdem zuvor der Metallkörper mit einer Lösung aus einem Teil Polymethylenmethacrylat und drei Teilen Xylol eingesprüht worden war. Nach einer Vortrocknung von 10 min wurde die Mantelfäche erneut mit der Mischung des Bindemittels eingesprüht, anschließend mit Diamantpulver bestreut und erneut getrocknet. Danach wurde der Metallkörper in ein mit Argon gespültes (Taupunkt -30° C) Quarzrohr eingebracht und bei 1090° C gelötet. Es entstand eine gleichmäßig mit Diamanten beschichtete Oberfläche. Beim Fräsen einer Glasscheibe von 5 mm Dicke konnte gegenüber einem galvanisch belegten Werkzeug eine höhere Abtragungsleistung bei einer deutlich höheren Standzeit beobachtet werden.

2. Die Stirnfläche eines Kugelabschnitts aus Stahl von 7 mm Durchmesser wurde mit einer Pulvermischung von 75 Gew. % Silber, 12 Gew. % Kupfer, 8 Gew. % Indium und 5 Gew. % Titan vorbeschichtet. Dazu wurde der Kugelabschnitt zunächst mit einer Lösung aus einem Teil Polymethylenmethacrylat und drei Teilen Xylol eingesprüht und die Pulvermischung unmittelbar danach mit Hilfe einer Schüttrinne aufgestreut. Nach einer Vortrocknung von 5 min in einem erwärmten Luftstrom von 50° C wurde die Mantelfläche erneut mit dem Bindemittel eingesprüht, anschließend mit Diamantpulver aus einem Vibrationsförderer bestreut und erneut getrocknet. Der so beschichtete Körper wurde unter Ar im Durchlaufofen bei 1000° C gelötet. Die Beschichtung und die Lötung wurden einmal wiederholt. Es entstand eine gleichmäßige mit Diamanten beschichtete Metalloberfläche. Die Kanten eines Aluminiumoxidquaders von 30 cm Kantenlänge konnten damit mit hoher Abtragsleistung gebrochen werden.

**Patentansprüche**

1. Verfahren zum Beschichten der Oberfläche von metallischen und keramischen Körpern mit Hartstoffen in Form von Diamanten, keramischen Oxiden, Nitriden, Siliziden und Boriden durch Auflöten entsprechender Pulver unter Vakuum oder Schutzgas,
dadurch gekennzeichnet,
daß als Lot eine Pulvermischung aus 60 bis 90 Gew. % Silberpulver, 2 bis 35 Gew. % Kupferpulver, 2 bis 30 Gew. % Zinn- und/oder Indiumpulver und 2 bis 20 Gew. % Titan, Zirkonium, Hafnium, Chrom, Vanadium, Tantal, Niob, Titanhydrid, Zirkoniumhydrid und/oder Hafniumhydrid in Pulverform mit einem organischen Bindemittel auf die zu beschichtende Oberfläche aufgetragen wird, wobei die Teilchengröße der Metallpulver kleiner sein muß als die des aufzutragenden Hartstoffpulvers, anschließend das Hartstoffpulver aufgebracht und das ganze auf Temperaturen zwischen 900 und 1200° C erhitzt wird.

2. Verfahren nach Anspruch 1,
dadurch gekennzeichnet,
daß das Hartstoffpulver trocken auf die zuvor mit einem Bindemittel belegte Metallpulverschicht aufgebracht wird.

**3.** Verfahren nach Anspruch 1 oder 2,
dadurch gekennzeichnet,
daß die Teilchengröße des pulverförmigen Titan, Zirkonium, Hafnium, bzw. derer Hydride, Chrom, Vanadium, Tantal, Niob, kleiner ist als die Teilchengröße des Silberpulvers.

## Claims

**1.** A process for coating the surface of metallic and ceramic components with hardmaterials in the form of diamonds, ceramic oxides, nitrides, silicides and borides by soldering on of corresponding powders in vacuo or in an inert gas atmosphere, characterized in that a powder mixture of 60 to 90% by weight silver powder, 2 to 35% by weight copper powder, 2 to 30% by weight tin and/or indium powder and 2 to 20% by weight titanium, zirconium, hafnium, chromium, vanadium, tantalum, niobium, titanium hydride, zirconium hydride and/or hafnium hydride in the form of a powder containing an organic binder is applied as solder to the surface to be coated, the particle size of the metal powder having to be smaller than that of the powder-form hard material to be applied, the powder-form hard material is then applied and the whole is heated to temperatures of 900 to 1,200°C.

**2.** A process as claimed in claim 1, characterized in that the powder-form hard material is applied dry to the metal powder layer coated beforehand with a binder.

**3.** A process as claimed in claim 1 or 2, characterized in that the particle size of the powder-form titanium, zirconium, hafnium or their hydrides, chromium, vanadium, tantalum, niobium, is smaller than the particle size of the silver powder.

## Revendications

**1.** Procédé pour le revêtement de la surface de corps métalliques et céramiques avec des matières dures sous forme de diamants, oxydes céramiques, nitrures, siliciures et borures par application par brassage de poudres correspondantes, sous vide ou sous un gaz protecteur, caractérisé en ce que l'on applique, en tant que brasure sur la surface à revêtir, un mélange de poudres composé de 60 à 90 % en poids de poudre d'argent, de 2 à 35 % en poids de poudre de cuivre, de 2 à 30 % en poids de poudre d'étain et/ou de poudre d'indium et de 2 à 20 % en poids de titane, zirconium, hafnium, chrome, vanadium, tantale, niobium, hydrure de titane, hydrure de zirconium et/ou hydrure d'hafnium, sous forme de poudres, avec un liant organique, les tailles de particules des poudres métalliques devant être inférieures à celle de la poudre de matière dure à appliquer, ensuite on applique la poudre de matière dure et on chauffe l'ensemble à des températures comprises entre 900 et 1200°C.

**2.** Procédé selon la revendication 1, caractérisé en ce que la poudre de matière dure est appliquée à l'état sec sur la couche de poudre métallique chargée avec un liant.

**3.** Procédé selon la revendication 1 ou 2, caractérisé en ce que la taille des particules du titane, zirconium, hafnium, ou de leurs hydrures, du chrome, vanadium, tantale, niobium, pulvérulents, est inférieure à la taille de particules de la poudre d'argent.